# FASCICULE DE BREVET EUROPEEN

(11) **EP 1 453 653 B1**
(45) Date de publication et mention de la délivrance du brevet: **04.07.2007**
(21) Numéro de dépôt: 02804600.1
(22) Date de dépôt: 09.12.2002
(51) Int. Cl.: B29C 49/58, B29C 49/48

(54) **INSTALLATION DE SOUFFLAGE DE RECIPIENTS EN POLYMERE THERMOPLASTIQUE**
ANLAGE ZUM BLASFORMEN VON BEHÄLTERN AUS THERMOPLASTISCHEM POLYMER
INSTALLATION FOR BLOW MOULDING THERMOPLASTIC POLYMER CONTAINERS

(30) Priorité: 13.12.2001 FR 0116109
(43) Date de publication de la demande: 08.09.2004
(73) Titulaire: SIDEL PARTICIPATIONS, 76930 Octeville-sur-Mer (FR)
(72) Inventeur: EVRARD, Alain, c/o Sidel, F-76930 Octeville-sur-Mer (FR)
(74) Mandataire: Gorrée, Jean-Michel
(86) Numéro de dépôt international: PCT/FR2002/004230
(87) Numéro de publication internationale: WO 2003/049922

(56) Documents cités:
- WO-A-01/02157
- FR-A- 2 764 544
- FR-A- 2 790 704

## Description

La présente invention concerne des perfectionnements apportés aux installations de soufflage (y compris celles d'étirage-soufflage) de récipients, notamment de bouteilles, à partir d'ébauches en polymère thermoplastique tel que du PET, cette installation comportant :
- d'une part, au moins un moule de soufflage comprenant deux portions de moule accolables l'une contre l'autre par des faces de contact respectives et définissant alors une partie au moins de la cavité de moulage débouchant sur une face du moule par un passage de col propre à recevoir le col de l'ébauche qui est apte à reposer, par une collerette annulaire, sur ladite face du moule, et,
- d'autre part, des moyens de soufflage incluant une tuyère de soufflage du type cloche propre à être amenée en appui frontal étanche contre ladite face du moule en coiffant le col de l'ébauche,
lesdites deux portions de moule étant susceptibles de s'écarter au cours du soufflage sous l'effet de la pression du fluide de soufflage avec formation d'un interstice entre les susdites faces de contact des deux portions de moule.

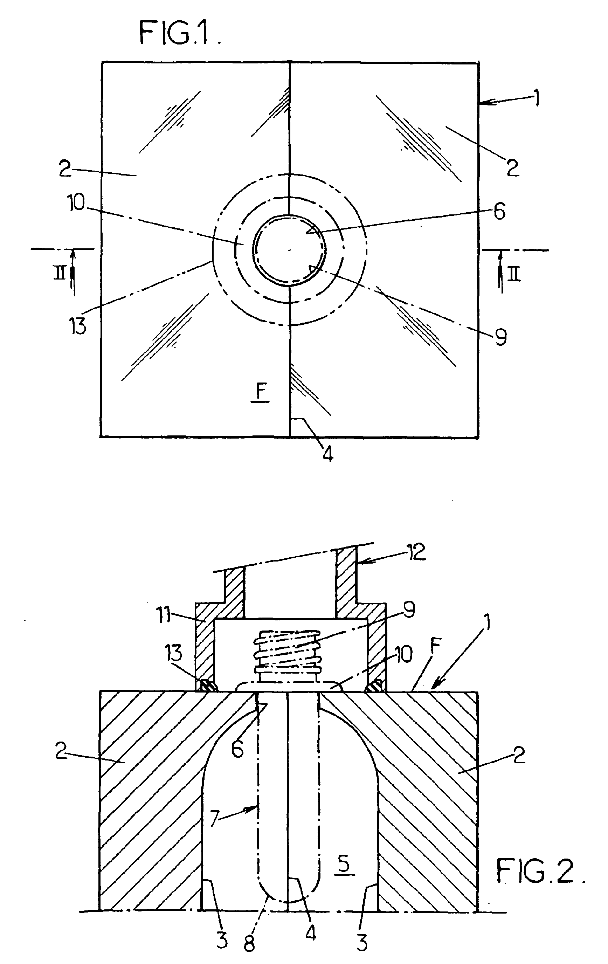

Une installation de soufflage telle que précitée est, par exemple, décrite et représentée dans le document FR-A-2 764 544 au nom de la Demanderesse. Sur les figures 1 et 2 des dessins annexés auxquelles on va se référer maintenant, on a représenté seulement les parties d'une telle installation plus spécifiquement concernées par la présente invention. La figure 1 est une vue de dessus d'une partie de moule de cette installation connue et la figure 2 est une vue de côté en coupe d'une partie dudit moule auquel est fonctionnellement associée une partie de la tuyère de soufflage.

Le moule 1 de soufflage comprend deux portions 2 de moule, qui par exemple sont articulées en rotation l'une par rapport à l'autre (moule portefeuille). Le moule 1 peut avoir toute structure d'ensemble souhaitable, notamment les deux portions 2 peuvent être agencées sous forme de demi-coquilles supportées, de façon démontable, dans des armatures rigides (non montrées). Chaque portion 2 est creusée intérieurement d'une empreinte 3 et les deux empreintes réunies, dans la position de fermeture du moule, définissent une cavité 5 présentant au moins une partie de la forme du récipient à obtenir. En position de fermeture, les deux portions 2 sont en appui mutuel par leurs faces de contact formant un plan de joint 4.

Dans certains cas, la cavité complète est définie par les deux portions de moule ; toutefois, dans la majorité des cas, les deux portions de moule ne définissent qu'une partie de la cavité, laquelle est complétée par une empreinte supplémentaire prévue dans un fond de moule : cette structure facilite le démoulage des récipients.

La cavité 5 de moulage se prolonge supérieurement par un passage 6 de col plus étroit qui débouche sur une face (ici supérieure) F du moule. Le passage 6 de col est agencé et conformé, notamment dimensionnellement, pour être apte à recevoir le col 9 de l'ébauche 7 à souffler. A la figure 2, l'ébauche 7 (représentée sous forme d'une préforme) a son corps 8 qui est engagé dans la cavité 5 de moulage et son col 9 qui est engagé en partie dans le passage 6 et qui pour le reste surmonte la face F du moule en reposant sur celle-ci par sa collerette 10.

La face F reçoit en appui frontal étanche la partie élargie ou cloche 11 d'une tuyère 12 de soufflage, la cloche 11 étant munie d'un joint 13 d'étanchéité annulaire frontal.

En général, le soufflage de l'ébauche 7 est accompagné d'un étirage axial obtenu à l'aide d'une tige mobile engagée à travers la tuyère 12 et le col 9 de l'ébauche, tige qui n'est pas représentée à la figure 2 pour simplifier la lecture du dessin.

Le soufflage de l'ébauche est effectué par injection d'un fluide (en principe de l'air) sous haute pression (par exemple typiquement 40 x 10⁵ Pa).

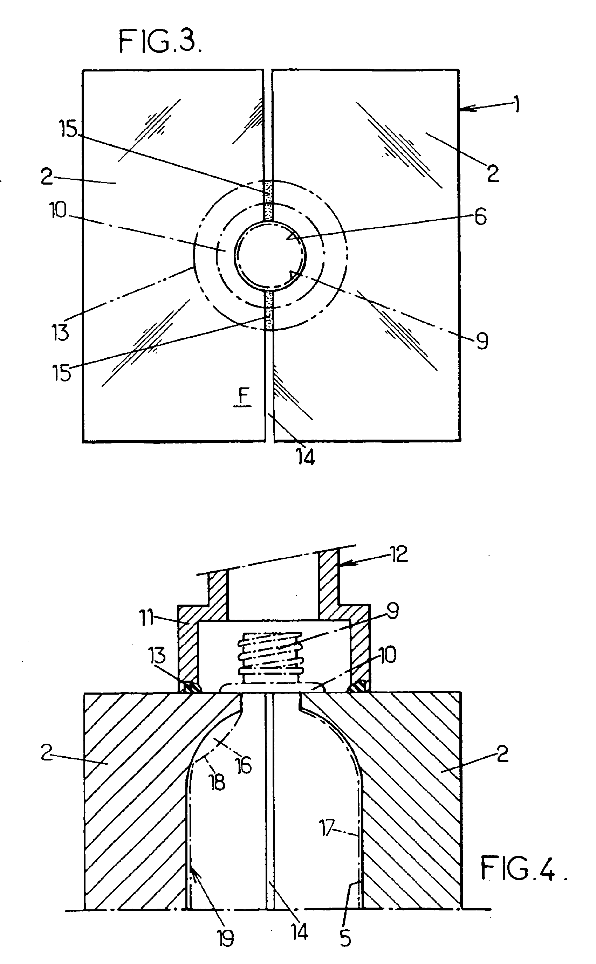

Sous l'effet de cette pression de soufflage élevée, il est possible que les deux portions 2 de moule s'écartent légèrement l'une de l'autre et qu'apparaisse alors, entre leurs faces de contact respectives, un interstice 14 comme illustré aux figures 3 et 4 établies en correspondance respective avec les figures 1 et 2. Sur les figures 3 et 4, la largeur de l'interstice 14 entre les deux portions a été volontairement considérablement agrandie pour que les dessins soient mieux lisibles ; mais, en pratique, il est très faible (typiquement par exemple de l'ordre de 0,05 mm).

Cependant, bien que faible, cet interstice est suffisant pour que du fluide de soufflage sous haute pression puisse s'infiltrer dans les parties 15 de cet interstice comprises entre le col 9 de l'ébauche et le joint 13 de la cloche 11 (parties qui sont hachurées sur la figure 3 pour faciliter la compréhension). Il en résulte que du fluide pénètre entre la paroi de la cavité 5 de moulage et le corps 17 du récipient 19 qui est en cours de formation sans être encore parvenu au contact de la paroi de la cavité 5 de moulage. Ce fluide peut ne pas pouvoir être refoulé en totalité lors du développement du corps 17 du récipient en cours de formation sous l'effet du soufflage et une poche de fluide peut subsister, en particulier au niveau de l'épaule du récipient, comme illustré en 16 à la figure 4 : le corps 17 du récipient définitif 19 présente alors une anomalie locale de forme (cuvette) 18 qui n'est pas acceptable et qui entraîne la mise au rebut du récipient.

L'invention a donc pour but de remédier à cet inconvénient, étant toutefois souligné que l'invention ne cherche pas à trouver une solution évitant l'écartement des portions de moule (il existe à cet effet diverses solutions connues, par exemple celle consistant à soumettre la face arrière de chaque portion de moule à une contre-pression fluidique ayant sensiblement même valeur que la pression de soufflage) : l'invention vise uniquement, étant acceptée l'existence de l'écartement des portions, à proposer une solution tendant à éviter une malformation des récipients finalement obtenus, ladite solution devant se révéler simple et peu coûteuse à mettre en oeuvre et devant pouvoir être réalisée sur des installations déjà existantes.

A ces fins, l'invention propose une installation de soufflage de récipients telle que mentionnée au préambule qui, étant agencée conformément à l'invention, se caractérise en ce que des moyens de fuite de relativement grande section (considérée en regard de la section offerte au fluide par le susdit interstice d'écartement) sont prévus à partir d'au moins une face de contact d'au moins une portion de moule et s'étendent jusqu'à l'extérieur du moule au-delà de l'appui de la cloche de la tuyère de soufflage, ce grâce à quoi le fluide de soufflage sous haute pression qui peut pénétrer dans l'interstice est évacué au moins en majeure partie par lesdits moyens de fuite et seulement au plus une faible partie dudit fluide peut parvenir, sous une relativement faible pression, jusque dans la cavité de moulage.

La fraction de fluide qui peut parvenir dans la cavité de moulage est alors sous une pression très faible (quelques 10⁵ Pa) et ne peut pas faire obstacle au développement correct de la paroi du récipient contre la totalité de la surface de la cavité de moulage : on est ainsi assuré de l'obtention de récipients de forme correcte malgré l'écartement des portions de moule lors du processus de soufflage.

De préférence, des moyens de fuite sont constitués à partir d'au moins une face de contact d'au moins une portion de moule de part et d'autre de la cavité de moulage.

Avantageusement, il est simple et économique que les moyens de fuite comprennent au moins une gouttière creusée dans la face de contact d'au moins une portion de moule entre l'intérieur et l'extérieur de l'appui de la tuyère de soufflage de type cloche, ladite gouttière étant borgne à son extrémité intérieure. De préférence dans ce cas, les moyens de fuite comprennent au moins deux gouttières creusées respectivement dans les faces de contact en vis-à-vis des deux portions de moule.

Pour obtenir un effet efficace, il est souhaitable que les moyens de fuite possèdent une section qui soit d'environ 10 fois supérieure à la section offerte au passage du fluide de soufflage par la partie de l'interstice coiffée par la tuyère cloche. Ainsi, pour fixer les idées, si les deux bords des portions de moule s'écartent l'un de l'autre d'environ 0,05 mm, la section de passage offerte au fluide de soufflage dans cet interstice peut être typiquement de l'ordre de 0,75 mm²; en donnant aux gouttières une section d'environ 7 mm² (diamètre de l'ordre de 3 mm), on obtient un rapport de sections de l'ordre de 10. Ainsi, pour une pression de soufflage d'environ 40 x 10⁵ Pa, la fraction de fluide de soufflage susceptible de parvenir maintenant jusque dans la cavité de soufflage possède une pression de l'ordre de 4 x 10⁵ Pa. Cette pression est insuffisante pour qu'il se forme, entre la paroi de la cavité de soufflage et la paroi thermoplastique du récipient en cours de développement sous l'action du soufflage, une bulle de gaz propre à entraîner une malformation localisée de ladite paroi thermoplastique.

Pour obtenir une efficacité optimale des moyens mis en oeuvre conformément à l'invention, il est préférable que le fluide sous pression soit évacué aussi vite que possible dès lors qu'il s'est engagé dans l'interstice. A cet effet, on prévoit que les moyens de fuite soient situés au voisinage de la susdite face du moule, et de préférence alors les moyens de fuite sont prévus sensiblement au niveau du susdit passage de col propre à recevoir le col de l'ébauche.

Dans les installations de soufflage mettant en oeuvre des portions de moule réalisées en aluminium, des problèmes d'étanchéité (notamment dus à l'usure) peuvent se présenter entre la cloche de la tuyère et la face précitée F en aluminium. Pour écarter cet inconvénient, il est connu que la face du moule soit équipée d'une plaque de col en acier, percée d'un trou de passage pour le col de l'ébauche, et contre laquelle la tuyère cloche est amenée en appui frontal étanche lors du soufflage. En outre cette plaque de col est amovible de manière que, par échange de plaques pourvues de passages de diamètres différents, il soit possible de souffler des récipients ayant des cols de diamètres divers sans qu'il soit nécessaire de changer le moule. Ladite plaque de col est formée de deux demi-plaques de col supportées respectivement par les faces supérieures des deux portions. Dans ce cas, on prévoit, conformément à l'invention, que les moyens de fuite soient disposés dans ladite plaque de col.

Avantageusement alors, les moyens de fuite comprennent deux gouttières creusées dans la face de contact d'au moins une demi-plaque de col, de part et d'autre respectivement du demi-passage qu'elle comporte, chaque gouttière étant borgne à son extrémité intérieure et, à son autre extrémité au-delà de l'appui de la tuyère cloche, communiquant avec un puits transversal débouchant dans la face supérieure de la demi-plaque. Dans un mode de réalisation simple, le puits transversal est défini par une échancrure creusée à l'extrémité de ladite face de contact de la demi-plaque de col, dans l'angle de raccordement de ladite face de contact avec la face de chant adjacente.

L'invention sera mieux comprise à la lecture de la description détaillée qui suit de certains modes de réalisation préférés donnés de façon purement illustrative. Dans cette description, on se réfère aux dessins annexés sur lesquels :
- la figure 5 est une vue partielle, en coupe selon la ligne V-V de la figure 6, d'une portion de moule, avec la tuyère cloche en position de soufflage, illustrant un exemple de mise en oeuvre des dispositions de l'invention ;
- la figure 6 est une vue de dessus d'un moule dans lequel l'une des portions est celle de la figure 5 ;
- la figure 7 est une vue partielle de dessus d'un moule illustrant une variante de réalisation de l'agencement de la figure 6 ;
- la figure 8 est une vue partielle de dessus d'un moule à plaque de col, illustrant un autre mode de réalisation de l'invention ;
- la figure 9 est une vue partielle, en coupe selon la ligne IX-IX de la figure 10, d'une portion de moule de la figure 8, avec la tuyère cloche en position de soufflage ; et
- la figure 10 est une vue partielle de dessus d'un moule à plaque de col, illustrant un mode de réalisation préféré de l'invention.

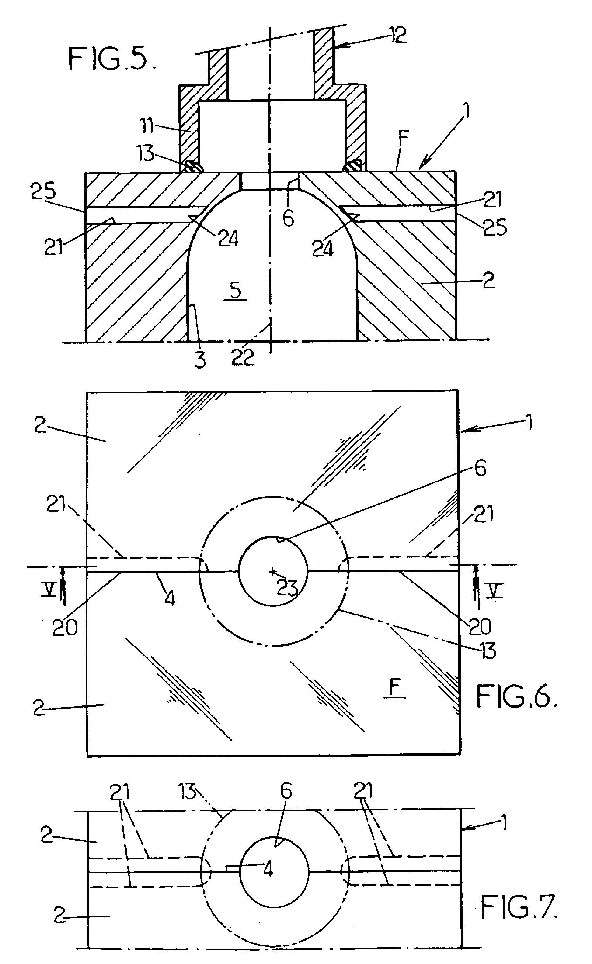

En se reportant tout d'abord aux figures 5 et 6, conformément à l'invention le moule 1 de l'installation de soufflage précédemment décrit en regard des figures 1 à 4 est pourvu de moyens de fuite de relativement grande section (considérée en regard de la section offerte au fluide par l'interstice susceptible d'apparaître entre les portions de moule au cours du soufflage). Ces moyens de fuite sont prévus à partir d'au moins une face 20 de contact d'au moins une des portions 2 et ils s'étendent jusqu'à l'extérieur du moule au-delà de l'appui (joint 13) de la cloche 11 de la tuyère 12 de soufflage. En outre, ces moyens de fuite sont de préférence constitués de manière à être situés de part et d'autre de la cavité 5 de moulage.

Il serait certes possible, à cette fin, de creuser au moins un canal (voire deux canaux situés de part et d'autre de la cavité 5 de moulage) à travers la portion 2, à partir de la face 20 de contact jusqu'à une face externe de la portion de moule, avec par exemple une étendue approximativement perpendiculaire à la face 20. Toutefois, un tel aménagement porte atteinte à l'intégrité de la portion de moule et, pour éviter cet inconvénient, on préfère avoir recours au mode de réalisation suivant.

Comme illustré aux figures 5 et 6, les moyens de fuite comprennent au moins une gouttière 21 creusée dans la face 20 de contact d'au moins une des portions 2 de moule, ladite gouttière s'étendant approximativement radialement (c'est-à-dire approximativement perpendiculairement à l'axe 22 de la cavité 5 du moule). De préférence, comme illustré, on prévoit deux gouttières 21 situées de part et d'autre de la cavité 5 de moulage.

Chaque gouttière 21 s'étend à cheval sous l'appui (joint 13) de la cloche 11 de la tuyère 12 de soufflage. A son extrémité radialement extérieure 25, elle débouche sur une face de la portion ; son extrémité radialement intérieure 24 est borgne, de manière à ne pas mettre la cavité 5 en communication avec l'atmosphère.

De préférence, chaque gouttière 21 est située en partie haute de la portion 2 de moule, à hauteur de l'épaule ou de préférence du col de l'empreinte de récipient définie par la cavité 5, de manière à être située au plus près de la pénétration du fluide de soufflage sous pression lors de l'écartement des portions de moule, afin que ce fluide soit aussi rapidement que possible évacué vers l'extérieur.

Enfin chaque gouttière possède une section relativement importante par rapport à la surface de passage offerte par l'interstice susceptible d'apparaître, par exemple de préférence de l'ordre de 10 fois plus grande.

La solution proposée par l'invention est facile à mettre en oeuvre car elle ne nécessite que des usinages simples à réaliser. Le mode de réalisation illustré aux figures 5 et 6, faisant appel à une ou de préférence deux gouttières, ne nécessite qu'une opération de fraisage.

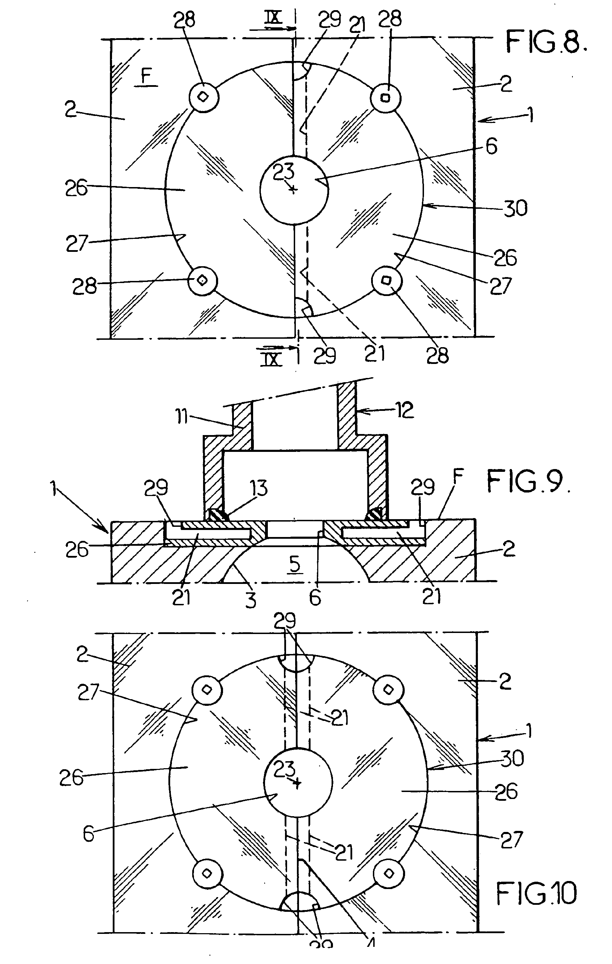

Pour éviter l'asymétrie existant entre les deux portions 2 de moule constituant au moins une partie du moule 1 des figures 5 et 6, il est préférable de prévoir deux gouttières 21 sur chaque portion 2, situées respectivement de part et d'autre de la cavité 5 de moulage, comme illustré à la figure 7. Ainsi deux gouttières 21 en vis-à-vis, appartenant respectivement aux deux portions 2, définissent ensemble un canal radial débouchant vers l'extérieur.

Si la présence des gouttières 21 devient inutile (par exemple en raison d'un aménagement des moules évitant l'écartement des portions de moule lors du soufflage), il est facile de colmater les gouttières et de refaire un état de surface correct à ces emplacements qui ne participent pas de façon directe au processus de moulage, de sorte que les portions de moule peuvent malgré tout être maintenues en service.

Les dispositions conformes à l'invention trouvent une application particulièrement intéressante dans le cas de moules en alliage d'aluminium dans lesquels on est amené à prévoir, sur la face F, une plaque de col en acier à la fois afin de procurer au joint de la cloche de la tuyère de soufflage une surface d'appui parfaitement plane, rigide et moins facilement usable que la face en aluminium du moule et afin d'accroître les capacités d'utilisation du moule pour des récipients ayant des cols de diamètres différents. C'est du reste précisément dans le cas de tels moules légers en alliage d'aluminium que risque de se produire un écartement des portions de moule lors du soufflage si une rigidification des portions de moule (renfort mécanique du support, compensation pneumatique arrière, ...) est absente ou insuffisante.

Aux figures 8 et 9 est illustré, dans les mêmes conditions qu'aux figures 5 et 6, un agencement de moule à plaque 30 de col. De façon pratique, la plaque 30 de col est constituée sous forme de deux demi-plaques 26 de col, par exemple en forme de demi-couronnes, qui sont encastrées dans des lamages 27 de forme complémentaire évidés dans la face F des portions 2 respectives. Des moyens de blocage, tels que des vis 28, maintiennent les demi-plaques 26.

Les deux demi-plaques 26 de col comportent des échancrures semi-circulaires respectives évidées dans leurs faces coopérantes, de sorte que ces échancrures réunies forment ensemble le susdit passage 6 prolongeant supérieurement la cavité 5 de moulage pour laisser place au col de l'ébauche.

Du fait que la plaque 30 de col est destinée à servir d'appui rigide au joint 13 annulaire de la cloche 11 de la tuyère 12 de soufflage, cette plaque 30 possède un diamètre supérieur à celui du joint 13.

Dans ces conditions, il est très avantageux de prévoir les gouttières 21 dans au moins une demi-plaque 26 de col, dans les mêmes conditions que celles indiquées plus haut, à ceci près que l'extrémité radialement extérieure de chaque gouttière est située sur le chant de la demi-plaque et que cette extrémité est mise en communication avec l'extérieur par un puits 29 creusé verticalement à son aplomb à partir de la face supérieure de la demi-plaque 26.

De même que précédemment, il est avantageux que les deux demi-plaques 26 de col soient identiques afin de ne pas compliquer l'assemblage du moule et la tenue des pièces de rechange en magasin. De ce fait, on prévoit que, comme illustré à la figure 10, les deux demi-plaques 26 de col sont équipées de gouttières 21 débouchant par des puits 29 respectifs.

Les dispositions qui viennent d'être décrites en regard des figures 8 à 10 sont d'un très grand intérêt car elles concernent non plus les portions de moule elles-mêmes, mais une pièce amovible de celles-ci. Il est ainsi possible d'équiper conformément à l'invention des moules préexistants par simple remplacement des demi-plaques de col, ou inversement de déséquiper des moules ainsi agencés si l'écartement des portions de moule est éliminé.

Au surplus, l'usinage des demi-plaques de col pour les pourvoir de gouttières 21 et de puits 29 (qui en pratique sont de simples échancrures creusées dans l'angle de raccordement de la gouttière 21 avec le chant périphérique externe des demi-plaques 26) est facile à réaliser par fraisage, et donc peu coûteux. Ce travail peut être effectué sur des demi-plaques de col préexistantes.

Enfin, et il ne s'agit pas là d'un moindre intérêt, les gouttières 21 sont situées au voisinage immédiat de la face F du moule de sorte qu'en cas d'écartement des portions, le fluide qui commence à pénétrer dans l'interstice est immédiatement récupéré et évacué par les gouttières 21.

## Revendications

1. Installation de soufflage ou d'étirage-soufflage de récipients, notamment de bouteilles, à partir d'ébauches (7) en polymère thermoplastique tel que du PET, cette installation comportant :
- d'une part, au moins un moule (1) de soufflage comprenant deux portions (2) de moule accolables l'une contre l'autre par des faces de contact respectives et définissant alors une partie au moins de cavité (5) de moulage débouchant sur une face (F) du moule par un passage (6) de col propre à recevoir le col (9) de l'ébauche qui est apte à reposer, par une collerette (10) annulaire, sur ladite face (F) du moule, et,
- d'autre part, des moyens de soufflage incluant une tuyère (12) de soufflage du type cloche (11) propre à être amenée en appui frontal étanche (13) contre ladite face (F) du moule en coiffant le col (9) de l'ébauche (7),
lesdites deux portions (2) de moule étant susceptibles de s'écarter au cours du soufflage sous l'effet de la pression du fluide de soufflage avec formation d'un interstice (14) entre les susdites faces de contact des deux portions de moule,
**caractérisée en ce que** des moyens de fuite (21, 24 ; 26 ; 29) de relativement grande section, considérée en regard de la section offerte au fluide par le susdit interstice, sont prévus à partir d'au moins une face (20) de contact d'au moins une portion (2) de moule et s'étendent jusqu'à l'extérieur du moule au-delà de l'appui (13) de la cloche (11) de la tuyère (12) de soufflage,
ce grâce à quoi le fluide de soufflage sous haute pression qui peut pénétrer dans l'interstice est évacué au moins en majeure partie par lesdits moyens de fuite et seulement au plus une faible partie dudit fluide peut parvenir, sous une relativement faible pression, jusque dans la cavité de moulage.

2. Installation selon la revendication 1, **caractérisée en ce que** des moyens de fuite sont constitués à partir d'au moins une face (20) de contact d'au moins une portion (2) de moule de part et d'autre de la cavité (5) de moulage.

3. Installation selon la revendication 1 ou 2, **caractérisée en ce que** les moyens de fuite comprennent au moins une gouttière (21) creusée dans la face (20) de contact d'au moins une portion (2) de moule entre l'intérieur et l'extérieur de l'appui (13) de la cloche (11) de la tuyère (12) de soufflage, ladite gouttière (21) étant borgne à son extrémité intérieure (24).

4. Installation selon la revendication 3, **caractérisée en ce que** les moyens de fuite comprennent au moins deux gouttières (21) creusées respectivement dans les faces de contact en vis-à-vis des deux portions de moule.

5. Installation selon l'une quelconque des revendications 1 à 4, **caractérisée en ce que** les moyens de fuite possèdent une section qui est d'environ 10 fois supérieure à la section offerte au passage du fluide de soufflage par la portion de l'interstice (14) coiffée par la cloche (11)

6. Installation selon l'une quelconque des revendications 1 à 5, **caractérisée en ce que** les moyens de fuite sont situés au voisinage de la susdite face (F) du moule.

7. Installation selon la revendication 6, **caractérisée en ce que** les moyens de fuite sont prévus au niveau du susdit passage (6) de col propre à recevoir le col de l'ébauche.

8. Installation selon l'une quelconque des revendications 1 à 7, dans laquelle la susdite face (F) du moule (1) est équipée d'une plaque (30) de col amovible percée d'un trou de passage (6) pour le col de l'ébauche et contre laquelle la cloche (11) de la tuyère (12) est amenée en appui frontal étanche (13) lors du soufflage, ladite plaque (30) de col étant formée de deux demi-plaques (26) de col supportées respectivement par les deux portions (2),
**caractérisée en ce que** les moyens de fuite sont prévus dans ladite plaque (30) de col.

9. Installation selon la revendication 8, **caractérisée en ce que** les moyens de fuite comprennent deux gouttières (21) creusées dans la face de contact d'au moins une demi-plaque de col, de part et d'autre respectivement du demi-passage qu'elle comporte, chaque gouttière (21) étant borgne à son extrémité intérieure et, à son autre extrémité au-delà de l'appui de la tuyère cloche, communiquant avec un puits (29) transversal débouchant dans la face supérieure de la demi-plaque (26) de col.

10. Installation selon la revendication 9, **caractérisée en ce que** le puits (29) transversal est défini par une échancrure creusée à l'extrémité de ladite face de contact de la demi-plaque (26) de col, dans l'angle de raccordement de ladite face de contact avec la face de chant adjacente.

## Claims

1. An installation for blow-molding or stretch-blow-molding containers, particularly bottles, from parisons (7) made of thermoplastic polymer such as PET, this installation comprising:
- on the one hand, at least one blowing mold (1) comprising two mold portions (2) that can be brought together so that they touch via respective contact faces and then define at least part of a molding cavity (5) opening onto one face (F) of the mold via a neck passage (6) able to receive the neck (9) of the parison which is able to rest, via an annular flange (10), against said face (F) of the mold, and,
- on the other hand, blowing means including a blowing nozzle (12) of the bell type (11) able to be brought to bear frontally in a sealed manner (13) against said face (F) of the mold, sitting over the neck (9) of the parison (7),
said two mold portions (2) being able to move apart during the blowing under the effect of the pressure of the blowing fluid with the formation of a gap (14) between said contact faces of the two mold portions,
**characterized in that** leakage means (21, 24; 26; 29) of relatively large cross section, when considered by comparison with the cross section offered to the fluid by the aforesaid gap, are provided from at least one contact face (20) of at least one mold portion (2) and extending beyond the seating (13) for the bell (11) of the blowing nozzle (12),
whereby the high-pressure blowing fluid that can enter the gap is removed at least for the most part by said leakage means and only a small proportion at most of said fluid can, at a relatively low pressure, get as far as the molding cavity.

2. The installation as claimed in claim 1, **characterized in that** leakage means are made from at least one contact face (20) of at least one mold portion (2) on each side of the molding cavity (5).

3. The installation as claimed in claim 1 or 2, **characterized in that** the leakage means comprise at least one channel (21) hollowed out from the contact face (20) of at least one mold portion (2) between the inside and the outside of the seating (13) for the bell (11) of the blowing nozzle (12), said channel (21) being blind at its interior end (24).

4. The installation as claimed in claim 3, **characterized in that** the leakage means comprise at least two channels (21) hollowed out respectively from the facing contact faces of the two mold portions.

5. The installation as claimed in any one of claims 1 to 4, **characterized in that** the leakage means have a cross section approximately 10 times as great as the cross section offered to the passage of the blowing fluid by the portion of the gap (14) over which the bell (11) sits.

6. The installation as claimed in any one of claims 1 to 5, **characterized in that** the leakage means are situated near said face (F) of the mold.

7. The installation as claimed in claim 6, **characterized in that** the leakage means are provided at said neck passage (6) able to accommodate the neck of the parison.

8. The installation as claimed in any one of claims 1 to 7, in which said face (F) of the mold (1) is equipped with a removable neck plate (30) pierced with a passage hole (6) for the neck of the parison and against which the bell (11) of the nozzle (12) is brought to bear frontally in a sealed manner (13) during blowing, said neck plate (30) being formed of two neck half-plates (26) borne respectively via the two portions (2),
**characterized in that** the leakage means are provided in said neck plate (30).

9. The installation as claimed in claim 8, **characterized in that** the leakage means comprise two channels (21) hollowed out from the contact face of at least one neck half-plate, one on each side of the half-passage it comprises, each channel (21) being blind at its inner end and, at its other end beyond the seating of the bell nozzle, communicating with a transverse well (29) opening into the upper face of the neck half-plate (26).

10. The installation as claimed in claim 9, **characterized in that** the transverse well (29) is defined by a notch hollowed out from the end of said contact face of the neck half-plate (26) in the corner where said contact face meets the adjacent edge face.

## Patentansprüche

1. Anlage zum Blasformen oder Zieh- und Blasformen von Behältern, insbesondere von Flaschen aus Vorformlingen (7) aus einem thermoplastischen Polymer wie PET, wobei diese Anlage Folgendes aufweist:
- zum einen mindestens eine Blasform (1), die zwei Formabschnitte (2) umfasst, die über jeweilige Kontaktflächen gegeneinander anlegbar sind und dann mindestens einen Teil eines Formungshohlraums (5) definieren, der auf einer Fläche (F) der Form über einen Halsdurchgang (6) mündet, der geeignet ist, den Hals (9) des Vorformlings aufzunehmen, der geeignet ist, über einen ringförmigen Bund (10) auf der Fläche (f) der Form aufzuliegen und
- zum anderen Blasmittel, die eine Blasdüse (12) von der Art einer Glocke (11) umfassen, die geeignet ist, gegen die Fläche (F) der Form frontal abdichtend zur Anlage (13) gebracht zu werden und dabei den Hals (9) des Vorformlings (7) abzudecken,
wobei die zwei Formabschnitte (2) während des Blasens unter der Wirkung des Blasfluid-Drucks unter Bildung eines Zwischenraums (14) zwischen den Kontaktflächen der zwei Formabschnitte auseinandergehen können,
**dadurch gekennzeichnet, dass** von mindestens einer Kontaktfläche (20) mindestens eines Formabschnitts (2) ausgehend Leckmittel (21, 24; 26; 29) mit einem Querschnitt, der gegenüber dem Querschnitt, den der Zwischenraum für das Fluid bietet, betrachtet relativ groß ist, vorgesehen sind und sich bis nach außerhalb der Form über die Anlage (13) der Glocke (11) der Blasdüse (12) hinaus erstrecken,
wodurch das Hochdruck-Blasfluid, das in den Zwischenraum eindringen kann, mindestens zum größten Teil durch die Leckmittel abgeführt wird und lediglich höchstens ein geringer Teil des Fluids mit einem relativ geringen Druck bis in den Formungshohlraum vordringen kann.

2. Anlage nach Anspruch 1, **dadurch gekennzeichnet, dass** die Leckmittel von mindestens einer Kontaktfläche (20) mindestens eines Formabschnitts (2) ausgehend beidseitig des Formungshohlraums (5) gebildet sind.

3. Anlage nach Anspruch 1 oder 2, **dadurch gekennzeichnet, dass** die Leckmittel mindestens eine Rinne (21) umfassen, die in der Kontaktfläche (20) mindestens eines Formabschnitts (2) zwischen dem Inneren und dem Äußeren der Anlage (13) der Glocke (11) der Blasdüse (12) gebildet ist, wobei die Rinne (21) an ihrem inneren Ende (24) blind ist.

4. Anlage nach Anspruch 3, **dadurch gekennzeichnet, dass** die Leckmittel mindestens zwei Rinnen (21) umfassen, die jeweils in den Kontaktflächen gegenüber den zwei Formabschnitten ausgebildet sind.

5. Anlage nach einem der Ansprüche 1 bis 4, **dadurch gekennzeichnet, dass** die Leckmittel einen Querschnitt besitzen, der ungefähr 10 Mal größer ist als der Querschnitt, den der von der Glocke (11) abgedeckte Abschnitt des Zwischenraums (14) für den Durchgang des Blasfluids bietet.

6. Anlage nach einem der Ansprüche 1 bis 5, **dadurch gekennzeichnet, dass** die Leckmittel in der Nähe der Fläche (F) der Form angeordnet sind.

7. Anlage nach Anspruch 6, **dadurch gekennzeichnet, dass** die Leckmittel an dem Halsdurchgang (6), der geeignet ist, den Hals des Vorformlings aufzunehmen, vorgesehen sind.

8. Anlage nach einem der Ansprüche 1 bis 7, bei der die Fläche (F) der Form (1) mit einer abnehmbaren Halsplatte (30) ausgestattet ist, in der ein Durchgangsloch (6) für den Hals des Vorformlings gebildet ist und gegen die die Glocke (11) der Düse (12) beim Blasen frontal abdichtend zur Anlage (13) gebracht wird, wobei die Halsplatte (30) durch zwei halbe Halsplatten (26) gebildet ist, die jeweils durch die zwei Abschnitte (2) getragen sind, **dadurch gekennzeichnet, dass** die Leckmittel in der Halsplatte (30) vorgesehen sind.

9. Anlage nach Anspruch 8, **dadurch gekennzeichnet, dass** die Leckmittel zwei Rinnen (21) umfassen, die in der Kontaktfläche mindestens einer halben Halsplatte jeweils beidseitig des Halbdurchgangs, den sie aufweist, ausgebildet sind, wobei jede Rinne (21) an ihrem inneren Ende blind ist und mit ihrem anderen Ende über die Anlage der Glockendüse mit einem Querschacht (29) kommuniziert, der in der Oberseite der halben Halsplatte (26) mündet.

10. Anlage nach Anspruch 9, **dadurch gekennzeichnet, dass** der Querschacht (29) durch eine Aussparung definiert ist, die an dem Ende der Kontaktfläche der halben Halsplatte (26) in dem Anschlusswinkel der Kontaktfläche mit der anliegenden Kantenfläche gebildet ist.
